Europäisches Patentamt

European Patent Office

Office européen des brevets

(11) Veröffentlichungsnummer : **0 389 503 B1**

# (12) EUROPÄISCHE PATENTSCHRIFT

(45) Veröffentlichungstag der Patentschrift :
**23.09.92 Patentblatt 92/39**

(21) Anmeldenummer : **88909308.4**

(22) Anmeldetag : **28.10.88**

(86) Internationale Anmeldenummer :
**PCT/EP88/00973**

(87) Internationale Veröffentlichungsnummer :
**WO 89/04431 18.05.89 Gazette 89/11**

(51) Int. Cl.⁵ : **F16D 71/00, H02K 7/10**

(54) **ELEKTROMECHANISCHE VORRICHTUNG ZUM ARRETIEREN EINER WELLE IN WENIGSTENS EINER STELLUNG.**

(30) Priorität : **06.11.87 DE 3737686**

(43) Veröffentlichungstag der Anmeldung :
**03.10.90 Patentblatt 90/40**

(45) Bekanntmachung des Hinweises auf die
Patenterteilung :
**23.09.92 Patentblatt 92/39**

(84) Benannte Vertragsstaaten :
**CH DE FR GB IT LI**

(56) Entgegenhaltungen :
**FR-A- 2 338 602**
**FR-A- 2 588 702**
**US-A- 3 022 432**

(73) Patentinhaber : **TELDIX GmbH**
**Grenzhöfer Weg 36 Postfach 105608**
**W-6900 Heidelberg 1 (DE)**

(72) Erfinder : **JANCZAK, Christian**
**Leutershäuser Stra e 15**
**W-6905 Schriesheim (DE)**
Erfinder : **SCHOPP, Richard**
**Köpfelweg 44**
**W-6900 Heidelberg 1 (DE)**

(74) Vertreter : **Wiechmann, Manfred, Dipl.-Ing.**
**ANT Nachrichtentechnik GmbH**
**Patentabteilung Gerberstrasse 33**
**W-7150 Backnang (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft eine elektromechanische Vorrichtung zum Arretieren einer Welle in wenigstens einer Stellung nach der Gattung des Hauptanspruchs.

Bei vielen Motorantrieben besteht ein Interesse daran, daß der Antrieb seine zum Abschaltzeitpunkt erreichte Stellung beibehält oder daß eine genau definierte Ausgangsstellung beibehalten wird, bevor die Blockierung des Antriebs aufgehoben wird und der Motor den Antrieb betätigt.

Aus der DE-A-26 01 558 ist eine elektromechanische Bremseinrichtung für elektrische Motoren insbesondere kleinerer Leistung bekannt, auf deren Welle, vorzugsweise auf einem zweiten freien Wellenstumpf, eine nicht oder gegen Widerstand in Umfangsrichtung verdrehbare Bremsnockenscheibe mit einem oder mehreren Nocken angeordnet ist, in die bei Abschalten des Motors von der Speisespannung ein beispielsweise durch Federkraft betätigtes Sperrglied eingreift. Das Sperrglied ist Teil eines besonderen Elektromagneten, der bei Einschalten des Motors ebenfalls an Spannung gelegt wird und das Sperrglied somit magnetisch wieder aus dem Eingriff mit dem bzw. den Nocken der Bremsnockenscheibe bringt.

Aufgabe der Erfindung ist es, eine elektromechanische Vorrichtung zum Arretieren einer Welle zu schaffen, bei der die Funktion der Arretierung, unbeeinflußt von großen Beschleunigungen in allen drei Raumachsen, wirksam ist. Die zur Entriegelung benötigte elektrische Energie soll möglichst klein sein.

Diese Aufgabe wird durch die im ersten Patentanspruch angegebenen Merkmale gelöst.

Vorteilhafte Ausgestaltungen ergeben sich aus den Unteransprüchen.

Die Erfindung wird nachfolgend anhand eines Ausführungsbeispiels näher erläutert.

Es zeigen:

Fig. 1 die erfindungsgemäße Arretiervorrichtung in Draufsicht,

Fig. 2 die erfindungsgemäße Arretiervorrichtung in Seitenansicht als Schnitt in der Ebene A - B der Fig. 1.

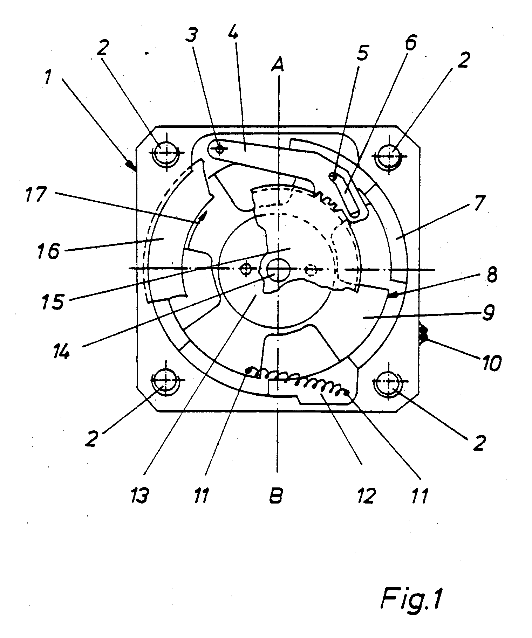

In Fig. 1 ist mit 1 das Gehäuse der Arretiervorrichtung bezeichnet. Das Gehäuse 1 der Arretiervorrichtung besteht aus Weicheisen und hat eine quadratische Form. In jeder der vier abgeschrägten Ecken des Gehäuses 1 befindet sich jeweils eine Gewindebohrung 2 zur Befestigung der Arretiervorrichtung an der Motoreinheit (nicht dargestellt).

Zum Anschluß der Arretiervorrichtung an eine Steuervorrichtung sind an einer Fläche des Gehäuses 1 Anschlußdrähte 10 der Spule 18 des Elektromagneten herausgeführt.

An der Innenfläche des Gehäuses 1 sind vier Polschuhe 7, die mit dem Gehäuse 1 ein Stück bilden, um jeweils 90° versetzt, mit einem Zwischenraum von ca. 45°, angeordnet. Die Gehäusewand weist auf der Oberseite an zwei gegenüberliegenden Stellen Ausfräsungen auf.

Eine dieser Ausfräsungen dient zur Aufnahme des Lagerzapfens 3 der Sperrklinke 4, um den sich die Sperrklinke 4 bei erregtem Elektromagneten radial nach außen bewegt und zur Aufnahme der Sperrklinke im erregten Zustand des Elektromagneten. Die andere Ausfräsung enthält einen ersten Teil der Federaufhängung 11 der Feder 12. Im Inneren des Gehäuses 1 ist die ringförmige Spule 18 des Elektromagneten so eingeklebt, daß der Drehanker 8 mit der der Spule 18 zugewandten Seite einen geringen axialen Luftspalt zur Spule 18 bildet und die Stirnflächen der Polschuhe 9 des Drehankers 8 den Polschuhen 7 des Gehäuses 1 mit geringem radialen Luftspalt in einer Ebene gegenüberstehen.

Der mit der Zentralschraube 13 am Gehäuse 1 der Arretiervorrichtung befestigte und auf einen Teflonring 19 aufliegende Drehanker 8 aus Weicheisen besitzt ebenfalls vier um 90° an seinem Umfang versetzt angeordnete ca. 45° breite Polschuhe 9 die im nichterregten Zustand des Elektromagneten mit ihren Stirnflächen die Polschuhe 7 des Gehäuses 1 unter Bildung eines geringen radialen Luftspalts nur gering überdecken. Auf einem Polschuh 9 des Drehankers 8, dem Lagerzapfen 3 der Sperrklinke 4 gegenüber, ist der zweite Teil der Federaufhängung 11 der Feder 12 angeordnet. Gegenüber dem Polschuh 9, dem zweiten Teil der Federaufhängung 11 um ca. 180° versetzt, ist auf einem Polschuh 9 des Drehankers 8 der in einem Führungsschlitz 6 der Sperrklinke 4 zusammen mit dem Drehanker 8 bewegliche Führungsstift 5 befestigt.

Die Sperrklinke 4 besitzt an ihrer der Wellenachse 20 zugewandten Seite vier Zähne, die im unerregten Zustand des Elektromagneten in das in Fig. 1 nur als Ausschnitt dargestellte auf der mit dem Antriebsmotor (nicht dargestellt) verbundenen Welle 14 befestigte Zahnrad 15 eingreifen. Auf der der Spule 18 abgewandten Seite befindet sich der Stützring 16 (hier nur als Ausschnitt dargestellt), der die Aufgabe hat eine axiale Bewegung der Sperrklinke 4 auf den Lagerzapfen 5 und ein Abgleiten der Feder 12 von den Federaufhängungen 11 zu verhindern.

Im unerregten Zustand des Elektromagneten wird der Drehanker 8 durch die Feder 12 um die Wellenachse 20 entgegen dem Uhrzeigersinn verdreht, bis der Führungsstift 5 an der linken Seite des Führungschlitzes 6 der Sperrklinke 4 anliegt. Die Zähne der Sperrklinke 4 greifen in dieser Stellung in die Verzahnung des Zahnrades 15 ein und arretieren eine Bewegung der Welle 14.

Werden die Anschlußdrähte 10 an eine Gleichspannung gelegt, so baut die Spule 18 ein Magnetfeld auf

2

das die Entstehung eines Drehmoments bewirkt, welches so gerichtet ist, daß eine Drehanker-Bewegung stattfindet, die den magnetischen Widerstand des magnetischen Kreises (bestehend aus Spule 18, Gehäuse 1, Polschuhe 7, Polschuhe 9, Drehanker 8 Luftspalt zwischen den Polschuhen 7 und 9) verkleinert, wodurch der Drehanker 8 entgegen der Federkraft der Feder 12 im Uhrzeigersinn 17 verdreht wird bis der Führungsstift 5 an der rechten Seite des Führungsschlitzes 6 der Sperrklinke 4 anliegt. Die Stirnflächen der Polschuhe 7 und 9 des Gehäuses 1 und des Drehankers 8 überdecken sich im erregten Zustand des Elektromagneten unter Bildung eines geringen radialen Luftspaltes um ca. 50%.

Hierdurch wird erreicht, daß der Elektromagnet, dessen Magnetfeld bestrebt ist, den magnetischen Widerstand noch mehr zu verkleinern, im erregten Zustand ständig ein im Uhrzeigersinn 17 wirkendes ausreichend großes Drehmoment auf den Drehanker 8 ausübt und damit die Arretierung der Welle 14 durch die Sperrklinke 4 aufgehoben bleibt.

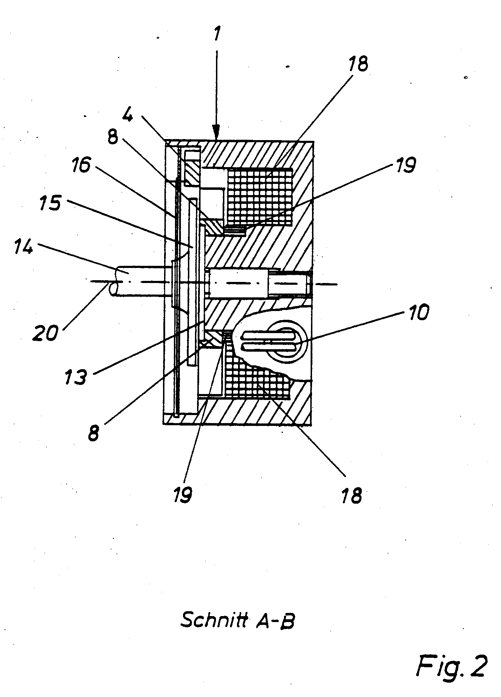

Die Fig. 2 zeigt die erfindugsgemäße Arretiervorrichtung in einer Seitenansicht als Schnitt in der Ebene A - B der Fig. 1. In dieser Fig. ist erkennbar, daß die Spule 18 um das zentrale Joch eines im querschnitt E-förmigen Gehäuses 1 angeordnet ist. Das zentrale Joch ist auf der dem Drehanker 8 zugewandten Seite abgestuft und nimmt in dieser Abstufung den Teflonring 19 auf, Der Teflonring 19 steht aus der radialen Oberfläche der Spule 18 leicht hervor, um durch einen axialen Abstand des Drehankers 8 zur Spule 18, eine Berührung der beiden Teile zu verhindern. Das Zahnrad 15 ist auf der Welle 14 des Motors (nicht dargestellt) so angeordnet, daß sich die Stirnflächen des Zahnrades 15 und der Sperrklinke 4, im erregten Zustand des Elektromagneten unter Bildung eines geringen axialen Luftspalts zum Drehanker 8 und zur Zentralschraube 13, gegenüber stehen.

Bezugszeichenliste

| 1 | Gehäuse |
| 2 | Gewindebohrung |
| 3 | Lagerzapfen |
| 4 | Sperrklinke |
| 5 | Führungsstift |
| 6 | Führungsschlitz |
| 7 | Polschuh, Gehäuse |
| 8 | Drehanker |
| 9 | Polschuh, Drehanker |
| 10 | Anschlußdrähte |
| 11 | Federaufhängung |
| 12 | Feder |
| 13 | Zentralschraube |
| 14 | Welle |
| 15 | Ausschnitt des Zahnrads, Zahnrad |
| 16 | Stützring |
| 17 | Drehrichtung des Drehankers |
| 18 | Spule |
| 19 | Teflonring |
| 20 | Wellenachse |

**Patentansprüche**

I. Elektromechanische Vorrichtung zum Arretieren einer Well (l4) in wenigsten einer Stellung, enthaltend einen Elektromagneten, eine durch den Elektromagneten betätigebare Sperrklinke (41), ein mit der Welle (l4) Verbundenes Teil (15), in das die Sperrklinge in ihrer Arretierstellung eingreift und eine Feder (12), die der auf die Sperrklinke (4) ausgeübten Kraft des erregten Elektromagneten entgegenwirkt, dadurch gekennzeichnet, daß das mit der Welle (l4) verbundene Teil ein Zahnrad (l5) ist und die Sperrklinke (4) an einem in dieses Zahnrad (l5) eingreifendes Teil eine entsprechende Verzahnung aufweist, daß die Spule (l8) des Elektromagneten koaxial zur Wellenachse (20) angeordnet ist, daß die Spule (l8) in einem einen E-förmige Querschnitt aufweisenden Gehäuse (l) permeablen Materials untergebracht ist, daß am zentralen Teil des Gehäuses (l) ein Drehanker (8) permeablen Materials gelagert ist, der wenigstens einen radialen Polschuh (9) aufweist, daß an der Innenfläche der Gehäusewandung wenigstens ein Polschuh (7) permeablen Materials in einer Ebene mit dem Drehanker (8) ausgebildet ist, wobei die Polschuhe (7,9) derart ausgebildet sind, daß sie sich mit ihren radialen Stirnflächen unter Bildung eines kleinen rasialen Luftspalts gegenüberstehen, daß zwischen dem Drehanker (8) und der Sperrklinke (4) eine einen Führungsstift (5) und einen begrenzten Führungsschlitz (6) aufweisende Verbindung besteht, die derart angeordnet ist, daß bei einer Drehbewegung des Drehankers (8) die Sperr- klinke (4) radial bewegt wird und hierdurch entsprechend der Richtung der Drehbewegung die Sperrklinge aus ihrer oder in ihre Arretierstellung gebracht wird und daß die Drehbewegung des Drehankers (8) derart begrenzt ist, daß bei unerregtem Elektromagneten die Stirnflächen der Polschuhe (7,9) sich nur geringfügig überdecken sich jedoch bei erregten Elektromagneten in einem höheren Maße, jedoch nicht vollständig, überdecken.

2. Elektromechanische Vorrichtung nach Anspruch 1, dadurch gekennzeichnet, daß die Feder (12) zwischen Gehäuse (1) und Drehanker (8) wirksam ist.

3. Elektromechanische Vorrichtung nach Anspruch 1, dadurch gekennzeichnet, daß die Welle (14) angetrieben wird.

4. Elektromechanische Vorrichtung nach Anspruch 1, dadurch gekennzeichnet, daß die axiale Bewegung der Feder (12) und der Sperrklinke (4) durch einen Stützring (16) begrenzt wird.

## Claims

1. Electromechanical device for stopping a shaft (14) in at least one position, the device comprising an electromagnet, a locking pawl (4) operable by means of the electromagnet, a component (15) connected with the shaft (14) into which engages the locking pawl in its arresting position and a spring (12) which counteracts the force exerted on the locking pawl (4) by the excited electromagnet, <u>characterised in that</u> the toothed wheel (15) connected with the shaft (14) and the locking pawl (4), on its part engaging in the toothed wheel (15), are provided with a corresponding tooth arrangement; the coil (18) of the electromagnet is arranged coaxially with the shaft axis (20); the coil (18) is accommodated in a housing (1) that is made of a permeable material and has an E-shaped cross section; a rotating armature (8) made of permeable material and having at least one radial pole shoe (9) is supported at the central portion of the housing (1); at the interior face of the housing wall at least one pole shoe (7) of permeable material is formed in the same plane with the rotating armature (8), with the pole shoes (7, 9) being configured in such a way that their radial frontal faces face one another while forming a small radial air gap; between the rotating armature (8) and the locking pawl (4) there exists a connection comprising a guide pin (5) and a delimited guide slot (6), with the connection being arranged in such a way that, during a rotating movement of the rotating armature (8), the locking pawl (4) is moved radially and is thus brought out of or into its arresting position depending on the direction of the rotational movement; and the rotational movement of the rotating armature (8) is limited in such a way that an unexcited electromagnet causes the frontal faces of the pole shoes (7, 9) to overlap only slightly while an excited electromagnet causes them to overlap to a greater degree, although not completely.

2. An electromechanical device according to claim 1, characterised in that the spring (12) is effective between housing (1) and rotating armature (8).

3. An electromechanical device according to claim 1, characterised in that the shaft (14) is driven.

4. An electromechanical device according to claim 1, characterised in that the axial movement of the spring (12) and of the locking pawl (4) is delimited by means of a supporting ring (16).

## Revendications

1. Dispositif électromécanique pour bloquer un arbre (14) à au moins une position, comprenant un électroaimant, un cliquet d'arrêt (4) manoeuvré par l'électroaimant, une pièce (15) reliée à l'arbre (14) et dans laquelle pénètre le cliquet à sa position de blocage, ainsi qu'un ressort (12) qui s'oppose à la force exercée par l'électroaimant excité sur le cliquet d'arrêt (4), caractérisé en ce que la pièce reliée à l'arbre (14) est un pignon (15) et le cliquet d'arrêt (4) porte une denture correspondante sur une partie pénétrant dans ce pignon (15), que la bobine (18) de l'électroaimant est disposée coaxialement à l'axe géométrique (20) de l'arbre, que la bobine (18) est logée dans un boîtier (1) de matériau perméable ayant une section en forme de E, qu'une armature rotative (8) en matériau perméable est montée sur la partie centrale du boîtier (1) et est pourvue d'au moins un épanouissement polaire radial (9), qu'au moins un épanouissement polaire (7) en matériau perméable est formé sur la surface intérieure de la paroi du boîtier, dans un plan contenant également l'armature rotative (8), les épanouissements polaires (7, 9) étant conformés de manière qu'ils soient situés l'un en face de l'autre par leurs faces frontales radiales avec formation d'un petit entrefer radial, que l'armature rotative (8) et le cliquet d'arrêt (4) présentent entre eux une liaison, comportant une tige de guidage (5) et une fente de guidage (6) de longueur limitée, liaison qui est agencée de manière que lors d'un mouvement de rotation de l'armature (8), le cliquet (4) soit déplacé radialement et que, de ce fait, suivant le sens du mouvement de rotation, le cliquet soit écarté de sa position de blocage ou amené à sa position de blocage, et que le mouvement de rotation de l'armature (8) est limité de telle façon que les faces frontales des épanouissements polaires (7, 9) se recouvrent seulement dans une faible mesure lorsque l'électroaimant n'est pas excité, mais se recouvrent dans une plus forte mesure, sans se recouvrir complètement, lorsque l'électroaimant est excité.

2. Dispositif électromécanique selon la revendication 1, caractérisé en ce que le ressort (12) agit entre le boîtier (1) et l'armature rotative (8).

3. Dispositif électromécanique selon la revendication 1, caractérisé en ce que l'arbre (14) est entraîné.

4. Dispositif électromécanique selon la revendication 1, caractérisé en ce que le mouvement axial du ressort (12) et du cliquet d'arrêt (4) est limité par un anneau d'appui (16).

Fig.1

Schnitt A-B

Fig. 2